# EUROPEAN PATENT SPECIFICATION

(11) **EP 4 161 433 B1**
(45) Date of publication and mention of the grant of the patent: **12.06.2024**
(21) Application number: 21737184.8
(22) Date of filing: 28.05.2021
(51) Int. Cl.: A61C 3/025, A61C 17/02, A61C 17/16

(54) **DEVICE FOR ORAL HYGIENE**
VORRICHTUNG FÜR DIE MUNDHYGIENE
DISPOSITIF POUR HYGIÈNE BUCCALE

(30) Priority: 05.06.2020 IT 202000013372; 07.08.2020 IT 202000019669; 07.08.2020 IT 202000019681
(43) Date of publication of application: 12.04.2023
(73) Proprietor: CARRAZZA, Giovanni, 84036 Sala Consilina (SA) (IT); Vespa, Augusto, 16167 Genova (GE) (IT)
(72) Inventor: CARRAZZA, Giovanni, 84036 Sala Consilina (SA) (IT); Vespa, Augusto, 16167 Genova (GE) (IT)
(74) Representative: Garavelli, Paolo
(86) International application number: PCT/IT2021/050169
(87) International publication number: WO 2021/245714

(56) References cited:
- EP-A1- 2 862 543
- EP-A2- 1 145 689
- DE-A1- 3 145 838
- GB-A- 2 379 406

## Description

The invention here described refers to a device suitable for oral cavity cleaning and, in particular, for the efficient removal of the impurities, to ensure an adequate/needed hygiene and, then, a proper prevention of dental diseases.

Oral hygiene devices are widely used equipment in both the professional field (dental offices) and domestic sphere.

In its embodiment, the specific target of the proposed solution is to provide the implementation of a control/prevention system for supporting management of oral-dental hygiene/cleaning.

Oral hygiene tools aim at removing the bacterial biofilm (known as dental plaque or microbial aggregate), which is the main cause of oral diseases with a large impact on the population.

The use of oral hygiene devices is well known and they are inefficient.

In particular, it is not possible to remove dental impurities without using excessive quantities of water for rinsing the bristles of a normal toothbrush.

The downside of such a process, considering the state-of-art of a classic/traditional system/device, is the repetitive rinsing of the bristles, thus throwing away a large amount of toothpaste.

However, it is well known that the correct oral hygiene is fundamental to keep the teeth healthy over time without running into pathologies that are particularly painful and expensive to treat.

Although all kinds of products are now commonly available on the market for this purpose (for example mouthwashes, pressurized water jet devices, or electric toothbrushes), the function of common toothbrushes currently remains incomparable and irreplaceable, however, under proper usage.

Common toothbrushes include, as well known, handle ending with a head equipped with very dense bristles (more or less rigid) and through which the residual dirt on the teeth is removed.

However, the effectiveness of oral hygiene depends on the correct manual movement transmitted to the head of the toothbrush, which is rather unnatural to perform and, therefore, tiring.

Therefore, to combine the effective oral hygiene together with the ease of its execution, a large variety of alternative electromechanical devices has been proposed, which comprises mostly an electric motor for the toothbrush head rotation.

In particular, devices capable of jets of water under the toothbrush have represented the improvement solutions sought so far.

Furthermore, considering the most recent solutions, said brushes include moving mechanical parts subject to high wear and used with complex filling operations, resulting very expensive and complex.

A classic example is the "hand shower" type system described in the most recent patent n. CN 2235271 Y, which uses a manual water supply mechanism, making it particularly expensive and uncomfortable.

This can cause different problems such as poor/insufficient use for a proper oral hygiene, ineffectiveness, and unreliability during the teeth cleaning process.

A document in the art is exemplified by EP 1 145 689 A2.

The first aim of the present invention is providing a system that does not present the drawbacks of the aforementioned traditional systems/procedures and that is particularly simple and convenient, to provide effective and proper cleaning and, to minimize the user's efforts.

Another aim of the invention is providing a system with a simple/easy structure to build, with low costs and safe operation.

The technical process described, in fact, aims to solve the technical problem arising when we have to bring water to the mouth for lubrication and then to accurately wash the dental surface.

These and other purposes are achieved according to the present invention by means of a water storage and dispensing container/tank (H₂O) combined with a further storage and dispensing container/ tank of abrasive powder, for example of non-soluble or soluble type in supersaturated solution, in particular suitably micronized erythritol powder, or a natural polyalcohol (2R, 3S) - butane - 1,2,3,4 - tetraol, or E968 (C₄H₁₀O₄), as it inhibits the growth and development of bacterial plaque and has got null caloric intake, making it suitable also in Their action has been compared with other molecules, (for example Xylitol and Sorbitol), demonstrating its higher effectiveness, providing also a complete cleaning of dental surfaces(i.e. buccal and lingual), interdental spaces and the gingival sulcus.

Moreover, Xylitol has 2.4 kilocalories per gram, while Sorbitol has 4 kilocalories per gram, also presenting collateral effects (such as a laxative action).

In the most recent solutions, the abrasive powder used is sodium bicarbonate (NaHCO₃) or alternatively amino acid powder, including Glycine (C₂H₅NO₂), generally used to obtain the occasional removal of extrinsic tooth stains.

However, the intensive use of this type of powder is contraindicated, as their frequent use can cause iatrogenic wear of the teeth.

Furthermore, another advantageous aspect of the present invention and differently from patent n. US 2008/0176183, the device is built/designed to work for the purposes above required/defined without using external sources (for example an air/water network) and using mechanical parts (aggregated into a single body) subjected to a very slight physical-technical wear/deterioration.

Finally, in addition to the benefits described in the patent filed closest to the state of the art no. US 2014/0119809, the water collection tank is placed below or on the opposite side of the bristles of a normal/traditional toothbrush, guaranteeing and/or accumulating a specific amount of water at each rinse and releasing it in the mouth during brushing.

The water is sent directly to the user by means of a water pump connected to the storage/supply tank it or is first mixed with an abrasive powder, which can be not soluble or soluble in a supersaturated solution, and then sent to the user.

Alternatively, the solution (made of water and abrasive powder) is contained in a premixed cartridge.

The supply occurs under more or less variable pressure through appropriate nozzles, so that the jet is precisely directed to the teeth or gums, making it the best alternative to dental floss.

Pumps of sufficiently small size may be used to supply water at a maximum pressure of 800 - 900 mbar.

The present invention is described according to its currently preferred embodiment, but it will be understood that other devices/clarifications can be made with the evolution of technologies, variations, and modifications without thereby getting out of the scope of protection of the present inventive activity.

Therefore, the experts in the field will understand that it is possible to make lot of modifications and variations, which are always included in the scope of protection defined by the attached claims, in terms of reproductive scale and mainly of sizes, as the subjective/objective needs will define the proper technical-dimensional characteristics for this purpose, with the possibility of varying the shapes for commercial practicality, and to encourage the industrial sector to use different colours, anatomical shapes and/or various suitable measures, for example:
- for the choice of the water inlet slots;
- for the choice of the thickness of the materials;
- for the choice of the tank capacity.

Similarly, it is specified that further characteristics and advantages of the invention will become more evident through the detailed description of the preferred embodiment (however, other embodiments are not excluded), illustrated by way of non-limiting example in the attached drawings, in which the device/system method according to its preferred embodiment of the present invention consists of the following parts represented/described in the respective tables, where for each of them a schematic view is shown, in which:

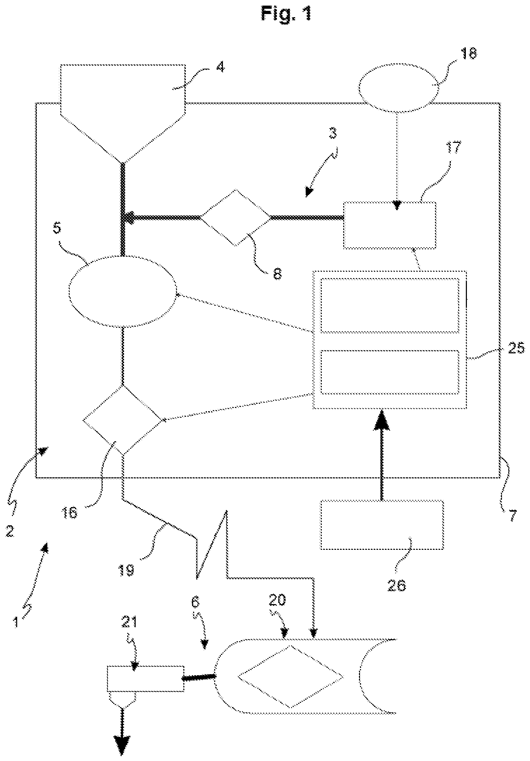

- Fig.1 shows a block diagram of the device according to the invention;

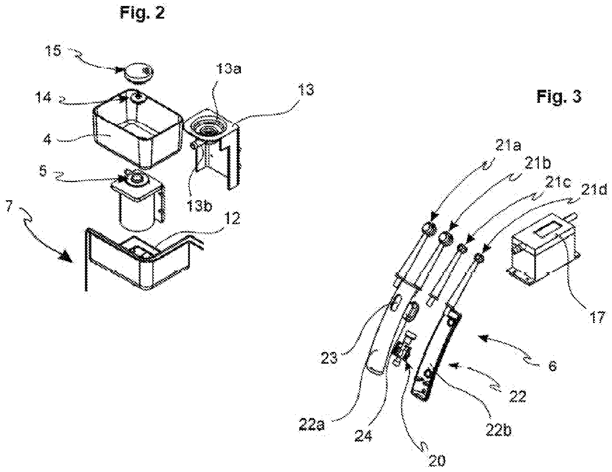

- Fig.2 and Fig.3 shows an embodiment of the device according to the invention.

According to the attached figures, said device is suitable for oral hygiene (1) characterized in that it includes a hydro pulser system (2) connected to an abrasive powder supply system (3), in which:
said hydro pulser system (2) comprises a water tank (4) connected to a water pump (5) suitable to supply a water flow to a treatment device (6) connected to said water pump (5) through an interposition of regulation device (16), that is a solenoid valve capable to intercept said water flow downstream of said water pump (5) by means of a truncated cone shaped flexible tube (19), or a Venturi effect device (tube) that comes out of an casing (7), and in which:
said hydro pulser system (2) and said abrasive powder supply system (3) are contained within said casing (7) comprising a housing (12) for mounting said water pump (5).

Said truncated cone shaped flexible tube (19) is made as to perform two fundamental tasks, including conveying an appropriate nebulization and preventing an excessive dispersion, allowing a perfectly distinguishable treatment area.

A bracket connection (13) is placed between said water tank (4) and said water pump (5) suitable to connect said water tank (4) to said water pump (5) and at the same time to fix said water pump (5) in said housing (12), in which:
said bracket connection (13) comprises a manifold (13a) suitable for convey a water flow to said water pump through a spout (13b) capable/adapted to connect said water tank (4) to said manifold (13a), and in which:
said water tank (4) comprises a hole in the top, suitable for said water flow collection, or comprises a hole in the bottom (not visible in the drawing) onto which is disposed an automatic closing valve (14) and a filter (15) suitable for intercept and/or regulate said water flow.

Said abrasive powder supply system (3) consists of an abrasive powder generator (17), for example of the E968 type (C₄H₁₀O4), connected to an ambient air intake opening (18) suitable for aspiring an adequate flow, in which:
said abrasive powder generator (17) produces abrasive powder (for example by means of compressed air) intercepted by a check valve (8) and then mixed with the water entering said water pump (5) in case the water is first mixed with an abrasive powder of the non-soluble or soluble type in a supersaturated solution before being supplied to the user, or at the outlet to said water pump (5) in case the water is supplied directly to the user.

An opening-closing valve (20) and said dispensing head (21) are integrated in said treatment device (6), in which:
said opening-closing valve (20) is enclosed in a handle (22) formed by two half-shells (22a), (22b), on one of said two half-shells (22a) consisting of a space (23) onto which is disposed a control/command button (24), which controls the operation (opening/closing) of said opening-closing valve (20), and in which:
said opening-closing valve (20) is opened and closed by pressing said control/command button (24).

This type of mechanism is well known in this specific technical sector and, therefore, it is not further described.

Said dispensing head (21) can be interchangeable and provided according to the function to be performed.

For example, the first head (21a) is a rotating head; the second head (21b) is a massage head; the third head (21c) is a conventional supply nozzle; the fourth head (21d) is a microjet nozzle.

Said rotating head (21a) and said massage head (21b) have a rotary movement, but the rotation speed changes as function of the water pressure.

The operation of the apparatus of the invention can be managed by a command and control unit (25) suitable to govern the operation of said water pump (5), of said abrasive powder generator (17) and of said regulation device (16), in which:
said command and control unit (25) is suitable to manage the speed of said water pump (5) so as to generate pulsations at the desired frequency or, alternatively, a continuous flow at a predetermined discharge and pressure rate.

Finally, a power supply system (26) provides the needed power for the operation of said hydro pulser system (2), of the abrasive powder supply system (3) and of the said command and control unit (25).

## Claims

1. Device suitable for oral hygiene (1), which comprises:
- a hydro pulser system (2) connected to an abrasive powder supply system (3) consisting of an abrasive powder generator (17) connected to an ambient air intake opening (18), wherein said
abrasive powder generator (17) produces abrasive powder intercepted by a check valve (8) and then mixed with the water entering or leaving said water pump (5), in which:
said hydro pulser system (2) comprises a water tank (4) connected with said water pump (5) suitable to supply a water flow to a treatment device (6) connected to said water pump (5) through an interposition of a regulation device (16) adapted to intercept said water flow downstream of said water pump (5) by means of a truncated cone shaped flexible tube (19) that comes out of a casing (7), and **characterized in that**,
said hydro pulser system (2) and said abrasive powder supply system (3) are contained in said casing (7) comprising a housing (12) for mounting said water pump (5);
- a bracket connection (13) placed between said water tank (4) and said water pump (5), in which:
said bracket connection (13) includes a manifold (13a) suitable for convey said water flow to said water pump (5) through a spout (13b) capable/adapted to connect said water tank (4) to said manifold (13a), and in which:
said water tank (4) comprises a hole in the bottom onto which is disposed an automatic closing valve (14) and a filter (15);
- an opening-closing valve (20) and a dispensing head (21) are integrated in said treatment device (6), in which:
said opening-closing valve (20) is enclosed in a handle (22) formed by two half-shells (22a), (22b), and in which:
one of said two half-shells (22a) consisting of a space (23) onto which is disposed a control/command button (24).

2. Device suitable for oral hygiene according to claim 1, **characterized in that**:
- said abrasive powder is insoluble.

3. Device suitable for oral hygiene according to claim 1, **characterized in that**:
- said abrasive powder is soluble in a supersaturated solution.

4. Device suitable for oral hygiene according to claim 2 or 3, **characterized in that**:
- the solution of water and abrasive powder is contained in a premixed cartridge.

5. Device suitable for oral hygiene according to claim 1, **characterized in that**:
- said abrasive powder is of type E968 (C₄H₁₀O4).

## Patentansprüche

1. Für die Mundhygiene geeignetes Gerät (1), **dadurch gekennzeichnet, dass** es umfasst:
- ein Hydropulsersystem (2), das an ein Schleifpulverversorgungssystem (3) angeschlossen ist, das aus einem Schleifpulvergenerator (17) besteht, der an eine Umgebungsluftansaugöffnung (18) angeschlossen ist, **dadurch gekennzeichnet, dass**: der Schleifpulvergenerator (17) Schleifpulver erzeugt, das von einem Rückschlagventil (8) abgefangen und dann mit dem in die Wasserpumpe (5) eintretenden oder diese verlassenden Wasser vermischt wird, wobei: das Hydropulsersystem (2) einen Wassertank (4) umfasst, der mit der Wasserpumpe (5) verbunden ist und dazu geeignet ist, einen Wasserstrom zu einer Behandlungsvorrichtung (6) zu leiten, die mit der Wasserpumpe (5) verbunden ist, und zwar durch Zwischenschaltung einer Regelvorrichtung (16), die dazu geeignet ist, den Wasserstrom stromabwärts der Wasserpumpe (5) mittels eines kegelstumpfförmigen flexiblen Schlauchs (19) abzufangen, der aus einem Gehäuse (7) kommt, und wobei: das Hydropulsersystem (2) und das Schleifpulverversorgungssystem (3) in dem Gehäuse (7) enthalten sind, das eine Deckung (12) zur Montage der Wasserpumpe (5) umfasst;
- eine Halterungsverbindung (13), die zwischen dem Wassertank (4) und der Wasserpumpe (5) angeordnet ist, wobei: die Halterungsverbindung (13) einen Verteiler (13a) umfasst, der geeignet ist, den Wasserfluss durch einen Ausguss (13b), der in der Lage/angepasst ist, den Wassertank (4) mit dem Verteiler (13a) zu verbinden, zu der Wasserpumpe (5) zu leiten, und wobei: der Wassertank (4) ein Loch im Boden aufweist, auf dem ein automatisches Schließventil (14) und ein Filter (15) angeordnet sind; ein Öffnungs-Schließventil (20) und ein Abgabekopf (21) sind in die Behandlungsvorrichtung (6) integriert ist, wobei: das Öffnungs-/Schließventil (20) in einem Griff (22) eingeschlossen ist, der aus zwei Halbschalen (22a), (22b) besteht, und wobei: eine der beiden Halbschalen (22a) aus einem Raum (23) besteht, in dem ein Steuer-/Befehlsknopf (24) angeordnet ist.

2. Zur Mundhygiene geeignetes Gerät nach Anspruch 1, **dadurch gekennzeichnet, dass**:
- das Schleifpulver ist unlöslich.

3. Zur Mundhygiene geeignetes Gerät nach Anspruch 1, **dadurch gekennzeichnet, dass**:
- das Schleifpulver ist in einer übersättigten Lösung löslich.

4. Zur Mundhygiene geeignetes Gerät nach Anspruch 2 oder 3, **dadurch gekennzeichnet, dass**:
- Die Lösung aus Wasser und Schleifpulver ist in einer vorgemischten Kartusche enthalten.

5. Zur Mundhygiene geeignetes Gerät nach Anspruch 1, **dadurch gekennzeichnet, dass**:
- das Schleifpulver ist vom Typ E968 (C4H10O4).

## Revendications

1. Dispositif adapté à l'hygiène bucco-dentaire (1) **caractérisé en ce qu'**il comprend:
- un système hydropulseur (2) relié à un système d'alimentation en poudre abrasive (3) constitué d'un générateur de poudre abrasive (17) relié à une ouverture d'admission d'air ambiant (18), **caractérisé en ce que**: ledit générateur de poudre abrasive (17) produit poudre abrasive interceptée par un clapet anti-retour (8) puis mélangée à l'eau entrant ou sortant de ladite pompe à eau (5), dans lequel: ledit système hydropulseur (2) comprend un réservoir d'eau (4) relié à ladite pompe à eau (5 ) apte à fournir un débit d'eau à un dispositif de traitement (6) relié à ladite pompe à eau (5) grâce à une interposition d'un dispositif de régulation (16) adapté à intercepter ledit débit d'eau en aval de ladite pompe à eau (5) au moyen d'un tube flexible (19) en forme de tronc de cône qui sort d'un boîtier (7), et dans lequel: ledit système hydropulseur (2) et ledit système d'alimentation en poudre abrasive (3) sont contenus dans ledit boîtier (7) comprenant une couverture (12) pour monter ladite pompe à eau (5);
- un support de connexion (13) placé entre ledit réservoir d'eau (4) et ladite pompe à eau (5), dans lequel: ledit support de connexion (13) comprend un collecteur (13a) adapté pour acheminer ledit flux d'eau vers ladite pompe à eau (5) à travers un bec verseur (13b) capable/adapté pour relier ledit réservoir d'eau (4) audit collecteur (13a), et dans lequel: ledit réservoir d'eau (4) comprend un trou dans le fond sur lequel est disposée une vanne de fermeture automatique (14) et un filtre (15); une valve d'ouverture-fermeture (20) et une tête de distribution (21) sont intégré audit dispositif de traitement (6), dans lequel: ledit clapet d'ouverture-fermeture (20) est enfermé dans une poignée (22) formée de deux demi-coquilles (22a), (22b), et dans lequel: l'une desdites deux des demi-coquilles (22a) constituées d'un espace (23) sur lequel est disposé un bouton de contrôle/commande (24).

2. Dispositif adapté à l'hygiène buccale selon la revendication 1, **caractérisé en ce que**:
- ladite poudre abrasive est insoluble.

3. Dispositif adapté à l'hygiène buccale selon la revendication 1, **caractérisé en ce que**:
- ladite poudre abrasive est soluble dans une solution sursaturée.

4. Dispositif adapté à l'hygiène buccale selon la revendication 2 ou 3, **caractérisé en ce que**:
- la solution d'eau et de poudre abrasive est contenue dans une cartouche prémélange.

5. Dispositif adapté à l'hygiène buccale selon la revendication 1, **caractérisé en ce que**:
- ladite poudre abrasive est de type E968 (*C*4*H*10*O*4).
